# EUROPÄISCHE PATENTANMELDUNG

(11) **EP 3 435 249 A1**
(43) Veröffentlichungstag der Anmeldung: **30.01.2019**
(21) Anmeldenummer: 17182776.9
(22) Anmeldetag: 24.07.2017
(51) Int. Cl.: G06F 17/30

(54) **VERFAHREN ZUM BEREITSTELLEN VON DOKUMENTEN**

(71) Anmelder: Equinox FinTech Solutions GmbH, 48147 Münster (DE)
(72) Erfinder: Boja, Fatmir, 48145 Münster (DE); Krüger, Jan Tobias, 48143 Münster (DE)
(74) Vertreter: Pelster, Arno

(57) **Zusammenfassung**

Die Erfindung betriff ein Verfahren zum Bereitstellen von Dokumenten durch eine dokumentebereitstellende Entität (14) für eine dokumenteanfordernde Entität (10), mit den Schritten: Bereitstellen einer elektronischen Kennung, welche einer elektronischen Dokumentenliste zugeordnet ist, für eine Bereitstellungsanwendung eines elektronischen Geräts (16) einer dokumentebereitstellenden Entität (14), Abrufen der elektronischen Dokumentenliste, welche der Kennung zugeordnet ist, durch die Bereitstellungsanwendung des elektronischen Geräts (16) der dokumentebereitstellenden Entität (14) von einer elektronischen Datenverwaltungseinrichtung (20), Ausgeben einer oder mehrerer Aufforderungen zum Bereitstellen der Dokumente, welche in der elektronischen Dokumentenliste bezeichnet sind, durch die Bereitstellungsanwendung des elektronischen Geräts (16) der dokumentebereitstellenden Entität (14), und Bereitstellen der auf der elektronischen Dokumentenliste bezeichneten Dokumente durch die Bereitstellungsanwendung des elektronischen Geräts (16) der dokumentebereitstellenden Entität (14) für die dokumenteanfordernde Entität (10).

## Beschreibung

Die Erfindung betrifft ein Verfahren zum Bereitstellen von Dokumenten durch eine dokumentebereitstellende Entität für eine dokumenteanfordernde Entität nach dem Oberbegriff des Patentanspruchs 1 und ein System, insbesondere zur Datenverarbeitung, nach dem Oberbegriff des Patentanspruchs 13.

Ferner betrifft die Erfindung ein Computerprogrammprodukt sowie einen computerlesbaren Datenträger.

Während einer Vielzahl von bekannten organisatorischen Prozessen ist es notwendig, dass eine dokumentebereitstellende Entität einer dokumenteanfordernden Entität mehrere unterschiedliche Dokumente zur Verfügung stellt, damit der jeweilige Prozess vorangetrieben oder abgeschlossen werden kann.

Eine dokumenteanfordernde Entität kann beispielsweise ein Bankinstitut sein, welches ihren Kunden Dienstleistungen für den Zahlungs-, Kredit- und Kapitalverkehr anbietet. Die jeweiligen Dienstleistungen sind an einen Prozess geknüpft, bei welchem ein Kunde des Bankinstituts regelmäßig unterschiedliche Dokumente zur Verfügung zu stellen hat. Der Kunde des Bankinstituts stellt in diesem Fall die dokumentebereitstellende Entität dar und kann beispielsweise eine natürliche Person oder ein Unternehmen sein. Prozesse, in denen der Kunde dem Bankinstitut Dokumente zur Verfügung zu stellen hat, sind beispielsweise die Kontoeröffnung, die Beantragung eines Darlehens oder der Abschluss eines Bausparvertrags.

Die dokumenteanfordernde Entität kann beispielsweise auch eine amtliche Behörde sein, welche für Bürger Serviceleistungen erbringt. Derartige Serviceleistungen können beispielsweise die Ausstellung eines Ausweises, die Eintragung in ein Register oder die Zulassung eines Kraftfahrzeugs betreffen. Zur Erbringung entsprechender Serviceleistungen sind ebenfalls Prozesse zu durchlaufen, bei welchen die Bürger der amtlichen Behörde unterschiedliche Dokumente zur Verfügung zu stellen haben. In diesem Fall stellen die Bürger somit die dokumentebereitstellende Entität dar.

Darüber hinaus existiert eine Vielzahl von weiteren Prozessen, bei welchen eine dokumentebereitstellende Entität einer dokumenteanfordernden Entität Dokumente zur Verfügung zu stellen hat.

Aufgrund der Komplexität der Prozesse setzen dokumenteanfordernde Entitäten vermehrt technische Systeme ein, wodurch die Bereitstellung von Dokumenten vereinfacht und der Bereitstellungsprozess überwachbar ist.

Die bekannten technischen Lösungen zur Vereinfachung der Dokumentenbereitstellung sind jedoch oftmals auf einen einzelnen oder wenige Anwendungsbereiche beschränkt und somit nicht universell einsetzbar. Außerdem sind die bekannten Lösungen oftmals aufwändig und binden somit unnötig personelle Ressourcen.

Die der Erfindung zugrunde liegende Aufgabe besteht somit darin, eine technische Lösung für die Bereitstellung von Dokumenten durch eine dokumentebereitstellende Entität für eine dokumenteanfordernde Entität bereitzustellen, welche die Dokumentenbereitstellung vereinfacht.

Die Aufgabe wird gelöst durch ein Verfahren der eingangs genannten Art, wobei einer Bereitstellungsanwendung eines elektronischen Geräts einer dokumentebereitstellenden Entität eine elektronische Kennung bereitgestellt wird, welche einer elektronischen Dokumentenliste zugeordnet ist, wobei die elektronische Dokumentenliste, welche der Kennung zugeordnet ist, durch eine Bereitstellungsanwendung des elektronischen Geräts der dokumentebereitstellenden Entität von einer elektronischen Datenverwaltungseinrichtung abgerufen wird. Erfindungsgemäß gibt die Bereitstellungsanwendung des elektronischen Geräts der dokumentenerstellenden Entität eine oder mehrere Aufforderungen zum Bereitstellen der Dokumente, welche in der elektronischen Dokumentenliste bezeichnet sind, aus und die auf der Dokumentenliste bezeichneten Dokumente werden durch die Bereitstellungsanwendung des elektronischen Geräts der dokumentebereitstellenden Entität der dokumenteanfordernden Entität bereitgestellt.

Die Erfindung macht sich die Erkenntnis zunutze, dass durch die Zuordnung einer Kennung zu einer elektronischen Dokumentenliste eine Bereitstellungsanwendung eines elektronischen Geräts der dokumentebereitstellenden Entität dazu befähigt werden kann, eine Dokumentenliste von einer elektronischen Datenverwaltungseinrichtung abzurufen, sofern die elektronische Datenverwaltungseinrichtung die elektronische Kennung einer Dokumentenliste zuordnen kann. Auf Grundlage der nunmehr vorliegenden Dokumentenliste kann die Bereitstellungsanwendung des elektronischen Geräts der dokumentebereitstellenden Entität einen Benutzer des elektronischen Geräts zur Bereitstellung der auf der Liste bezeichneten Dokumente auffordern. Nachdem einzelne oder sämtliche der auf der Liste bezeichneten Dokumente der Bereitstellungsanwendung bereitgestellt wurden, können die bereitgestellten Dokumente der dokumenteanfordernden Entität zur Verfügung gestellt werden. Durch die Dokumentenzuordnung und das Wissen um die bereitzustellenden Dokumente kann letztendlich eine automatisierte Erfassung, Identifikation, Qualitätssicherung und Zuordnung beliebiger Dokumente, oder einer definierten Liste von Dokumenten, zwecks automatisiertem Einbinden in ein Archivierungssystem oder einen Geschäftsvorfall erfolgen.

Die elektronische Datenverwaltungseinrichtung kann beispielsweise einen Server umfassen, welcher insbesondere von einem Drittanbieter betrieben wird. Vorzugsweise haben die dokumentebereitstellende Entität und/oder die dokumenteanfordernde Entität über das Internet Zugriff auf den Server der Datenverwaltungseinrichtung. Die elektronische Kennung ist vorzugsweise eine eindeutige elektronische Kennung.

In einer weiteren bevorzugten Ausführungsform des erfindungsgemäßen Verfahrens wird die elektronische Dokumentenliste, in welcher die mehreren unterschiedlichen Dokumente bezeichnet sind, erzeugt. Das Erzeugen der elektronischen Dokumentenliste erfolgt vorzugsweise durch die dokumenteanfordernde Entität. Vorzugsweise umfasst das Verfahren das Senden der elektronischen Dokumentenliste an die elektronische Datenverwaltungseinrichtung, wobei das Senden der elektronischen Dokumentenliste an die elektronische Datenverwaltungseinrichtung insbesondere über das Internet, besonders bevorzugt über eine SSL (Secure Sockets Layer) gesicherte oder TLS (Transport Layer Security) gesicherte Internetverbindung, erfolgt. Vorzugsweise erfolgt das Senden der elektronischen Dokumentenliste an die Schnittstelle der Anwendungsprogrammierung (API) der elektronischen Datenverwaltungseinrichtung. Vorzugsweise erfordert das Senden der elektronischen Dokumentenliste an die elektronische Datenverwaltungseinrichtung gültige Zugangsdaten für den Zugriff auf die elektronische Datenverwaltungseinrichtung.

Ferner ist es bevorzugt, wenn die elektronische Kennung eine Identifikationsnummer ist oder eine Identifikationsnummer umfasst. Das Verfahren kann ferner das Speichern der elektronischen Dokumentenliste durch die elektronische Datenverwaltungseinrichtung umfassen. Zum Speichern der elektronischen Dokumentenliste umfasst die elektronische Datenverwaltungseinrichtung vorzugsweise einen Speicher, wobei der Speicher ein lokaler Speicher der elektronischen Datenverwaltungseinrichtung oder ein entfernt angeordneter, insbesondere ein Cloud-Speicher, sein kann, auf welchen die elektronische Datenverwaltungseinrichtung zugreifen kann. Außerdem kann das Verfahren das Zuordnen einer elektronischen Kennung zu der elektronischen Dokumentenliste durch die elektronische Datenverwaltungseinrichtung umfassen.

Das erfindungsgemäße Verfahren wird ferner dadurch vorteilhaft weitergebildet, dass die elektronische Datenverwaltungseinrichtung die elektronische Kennung in einen auslesbaren Code umwandelt, die elektronische Kennung oder der auslesbare Code von der elektronischen Datenverwaltungseinrichtung an ein elektronisches Gerät der dokumenteanfordernden Entität gesendet wird und/oder die elektronische Kennung durch das elektronische Gerät der dokumenteanfordernden Entität in einen auslesbaren Code umgewandelt wird. Wenn die elektronische Datenverwaltungseinrichtung die elektronische Kennung in einen auslesbaren Code umwandelt, braucht das elektronische Gerät der dokumenteanfordernden Entität den umgewandelten Code lediglich darstellen oder wiedergeben. Beispielsweise umfasst der auslesbare Code einen zweidimensionalen optoelektronisch lesbaren Code, wie einen Fotocode oder einen Matrix-Code, oder einen Audio-Code. Der Matrix-Code kann beispielsweise ein QR-Code sein. Beispielsweise ist der auslesbare Code ein akustischer Code. Alternativ oder zusätzlich kann der auslesbare Code einen einfachen numerischen oder alphanumerischen Bestätigungscode umfassen. Wenn der auslesbare Code einen numerischen oder alphanumerischen Bestätigungscode umfasst, kann dieser beispielsweise der dokumentebereitstellenden Entität fernmündlich mitgeteilt werden, insbesondere in einem Telefongespräch.

In einer Weiterbildung des erfindungsgemäßen Verfahrens umfasst das Bereitstellen der elektronischen Kennung, welche der elektronischen Dokumentenliste zugeordnet ist, für die Bereitstellungsanwendung des elektronischen Geräts der dokumentebereitstellenden Entität das Einlesen der elektronischen Kennung oder des auslesbaren Codes durch die Bereitstellungsanwendung des elektronischen Geräts der dokumentebereitstellenden Entität, das Senden der elektronischen Kennung oder des auslesbaren Codes von dem elektronischen Gerät der dokumenteanfordernden Entität an das elektronische Gerät der dokumentebereitstellenden Entität, und/oder das Umwandeln des auslesbaren Codes in die elektronische Kennung durch die Bereitstellungsanwendung des elektronischen Geräts der dokumentebereitstellenden Entität. Das Einlesen der elektronischen Kennung oder des auslesbaren Codes durch die Bereitstellungsanwendung des elektronischen Geräts der dokumentebereitstellenden Entität erfolgt vorzugsweise mittels einer Kamera, eines Ultraschallempfängers und/oder eines Mikrofons des elektronischen Geräts der dokumentebereitstellenden Entität. Alternativ erfolgt das Einlesen der elektronischen Kennung oder des auslesbaren Codes durch die Bereitstellungsanwendung des elektronischen Geräts der dokumentebereitstellenden Entität über eine manuelle Eingabe an dem elektronischen Gerät der dokumentebereitstellenden Entität.

In einer besonders vorteilhaften Ausführungsform des erfindungsgemäßen Verfahrens umfasst das Abrufen der elektronischen Dokumentenliste, welche der Kennung zugeordnet ist, durch die Bereitstellungsanwendung des elektronischen Geräts der dokumentebereitstellenden Entität von der elektronischen Datenverwaltungseinrichtung das Senden der elektronischen Kennung durch die Bereitstellungsanwendung des elektronischen Geräts der dokumentebereitstellenden Entität an die elektronische Datenverwaltungseinrichtung, das Auswerten der von der Bereitstellungsanwendung des elektronischen Geräts der dokumentebereitstellenden Entität empfangenen elektronischen Kennung durch die elektronische Datenverwaltungseinrichtung und/oder das Senden der zu der elektronischen Kennung zugeordneten elektronischen Dokumentenliste von der elektronischen Datenverwaltungseinrichtung an die Bereitstellungsanwendung des elektronischen Geräts der dokumentebereitstellenden Entität. Das Senden der elektronischen Kennung durch die Bereitstellungsanwendung des elektronischen Geräts der dokumentebereitstellenden Entität an die elektronische Datenverwaltungseinrichtung und/oder das Senden der zu der elektronischen Kennung zugeordneten elektronischen Dokumentenliste von der elektronischen Datenverwaltungseinrichtung an die Bereitstellungsanwendung des elektronischen Geräts der dokumentebereitstellenden Entität erfolgt vorzugsweise über eine Internetverbindung, besonders bevorzugt über eine SSL (Secure Sockets Layer) gesicherte oder TLS (Transport Layer Security) gesicherte Internetverbindung. Das Auswerten der von der Bereitstellungsanwendung des elektronischen Geräts der dokumentebereitstellenden Entität empfangenen elektronischen Kennung durch die elektronische Datenverwaltungseinrichtung umfasst vorzugsweise das Auslesen der elektronischen Kennung durch die elektronische Datenverwaltungseinrichtung und das Prüfen, ob der elektronischen Kennung eine elektronische Dokumentenliste zugeordnet ist, durch die elektronische Datenverwaltungseinrichtung.

Wenn der elektronischen Kennung, welche durch die Bereitstellungsanwendung des elektronischen Geräts der dokumentebereitstellenden Entität an die elektronische Datenverwaltungseinrichtung gesendet wurde, keine elektronische Dokumentenliste zugeordnet ist, wird vorzugsweise auch keine elektronische Dokumentenliste von der elektronischen Datenverwaltungseinrichtung an die Bereitstellungsanwendung des elektronischen Geräts der dokumentebereitstellenden Entität gesendet. Wenn durch die Bereitstellungsanwendung des elektronischen Geräts der dokumentebereitstellenden Entität mehrmals eine elektronische Kennung an die elektronische Datenverwaltungseinrichtung gesendet wurde, welcher keine elektronische Dokumentenliste zugeordnet ist, kann die Kommunikation mit dem elektronischen Gerät der dokumentebereitstellenden Entität abgebrochen werden. Der Abbruch der Kommunikation erfolgt insbesondere dann, wenn eine Grenzanzahl von Sendungen von elektronischen Kennungen, welchen keine elektronische Dokumentenliste zugeordnet ist, überschritten wurde.

Das erfindungsgemäße Verfahren wird ferner dadurch vorteilhaft weitergebildet, dass das Ausgeben der einen oder der mehreren Aufforderungen zum Bereitstellen der Dokumente, welche in der elektronischen Dokumentenliste bezeichnet sind, durch die Bereitstellungsanwendung des elektronischen Geräts der dokumentebereitstellenden Entität das Darstellen einer oder mehrerer Dokumentenbezeichnungen durch die Bereitstellungsanwendung auf eine Anzeigeeinrichtung des elektronischen Geräts der dokumentebereitstellenden Entität und/oder das akustische Wiedergeben einer oder mehrerer Dokumentenbezeichnungen durch die Bereitstellungsanwendung mittels einer Tonwiedergabeeinrichtung des elektronischen Geräts der dokumentebereitstellenden Entität umfasst. Das Darstellen der einen oder der mehreren Dokumentenbezeichnungen erfolgt vorzugsweise durch das Darstellen eines Textes, eines Begriffs oder einer Buchstabenfolge auf der Anzeigeeinrichtung des elektronischen Geräts der dokumentebereitstellenden Entität. Alternativ zu der Dokumentenbezeichnung kann auch ein Abbild des bereitzustellenden Dokuments auf der Anzeigeeinrichtung des elektronischen Geräts der dokumentebereitstellenden Entität angezeigt werden. Die Anzeigeeinrichtung des elektronischen Geräts der dokumentebereitstellenden Entität kann beispielsweise ein Display oder ein Touchscreen sein. Die Tonwiedergabeeinrichtung des elektronischen Geräts der dokumentebereitstellenden Entität kann beispielsweise ein Lautsprecher sein. Ferner kann das Ausgeben der einen oder der mehreren Aufforderungen zum Bereitstellen der Dokumente, welche in der elektronischen Dokumentenliste bezeichnet sind, durch die Bereitstellungsanwendung des elektronischen Geräts der dokumentebereitstellenden Entität das selbsttätige Auswählen eines Kameramodus, eines Scanmodus oder eines Tonaufnahmemodus durch die Bereitstellungsanwendung des elektronischen Geräts der dokumentebereitstellenden Entität und/oder das Auswählen eines bereits auf einem Datenträger des elektronischen Geräts der dokumentebereitstellenden Entität vorliegenden Dokuments umfassen. Wenn der Tonaufnahmemodus ausgewählt wird, erfolgt die Aktivierung eines Mikrophons des elektronischen Geräts der dokumentebereitstellenden Entität.

In einer anderen Ausführungsform des erfindungsgemäßen Verfahrens umfasst die elektronische Dokumentenliste zu einzelnen, mehreren oder sämtlichen in der elektronischen Dokumentenliste bezeichneten Dokumenten Dokumenteneigenschaften und/oder dokumentenbezogene Informationen. Die Dokumenteneigenschaften und/oder die dokumentenbezogenen Informationen können beispielsweise den Dokumententyp des jeweiligen Dokuments, Informationen zu der zwingenden Notwendigkeit des jeweiligen Dokuments, die Seitenanzahl des jeweiligen Dokuments, Informationen über die Relevanz der Vorder- und/oder Rückseite der einen oder der mehreren Seiten des jeweiligen Dokuments und/oder andere Dokumenteninformationen umfassen. Hinsichtlich der Informationen zu der zwingenden Notwendigkeit des jeweiligen Dokuments kann ein Dokument als zwingend notwendig oder optional, also nicht zwingend notwendig, gekennzeichnet sein.

Außerdem ist ein erfindungsgemäßes Verfahren vorteilhaft, bei welchem das Ausgeben der einen oder der mehreren Aufforderungen zum Bereitstellen der Dokumente, welche in der elektronischen Dokumentenliste bezeichnet sind, durch die Bereitstellungsanwendung des elektronischen Geräts der dokumentebereitstellenden Entität das Prüfen des einen oder der mehreren bereitgestellten Dokumente insbesondere hinsichtlich der Dokumenteneigenschaften und/oder der dokumentenbezogenen Informationen durch die Bereitstellungsanwendung des elektronischen Geräts der dokumentebereitstellenden Entität, und/oder das Wiederholen einer Aufforderung zum Bereitstellen eines Dokuments, welches in der elektronischen Dokumentenliste bezeichnet ist, durch die Bereitstellungsanwendung des elektronischen Geräts der dokumentebereitstellenden Entität, wenn durch die Prüfung des entsprechenden Dokuments ein Fehler des bereitgestellten Dokuments erfasst worden ist, umfasst. Das Prüfen des einen oder der mehreren bereitgestellten Dokumente, insbesondere hinsichtlich der Dokumenteneigenschaften und/oder der dokumentenbezogenen Informationen durch die Bereitstellungsanwendung des elektronischen Geräts der dokumentebereitstellenden Entität umfasst vorzugsweise das Erkennen eines falschen Dokumententyps und/oder das Erkennen einer fehlenden Seite oder mehrerer fehlender Seiten eines mehrseitigen Dokuments, auf Grundlage der in der elektronischen Dokumentenliste spezifizierten Seitenzahl. Dadurch, dass das eine oder die mehreren von der dokumentebereitstellenden Entität bereitgestellten Dokumente geprüft werden, kann sichergestellt werden, dass die Dokumente den zuvor durch die dokumenteanfordernde Entität definierten Erfordernissen genügen, sodass die bereitgestellten Dokumente auch von der dokumenteanfordernden Entität in geplanter Weise verwendet werden können. Dadurch, dass mittels der Bereitstellungsanwendung des elektronischen Geräts der dokumentebereitstellenden Entität eine Bereitstellungsaufforderung wiederholt ausgegeben werden kann, wird ein Nutzer des elektronischen Geräts der dokumentebereitstellenden Entität auf die Fehlerhaftigkeit des bereitgestellten Dokuments hingewiesen und ihm die Möglichkeit gegeben, das Dokument erneut fehlerfrei zur Verfügung zu stellen.

In einer Weiterbildung des erfindungsgemäßen Verfahrens umfasst das Bereitstellen der auf der elektronischen Dokumentenliste bezeichneten Dokumente durch die Bereitstellungsanwendung des elektronischen Geräts der dokumentebereitstellenden Entität für die dokumenteanfordernde Entität das Senden der bereitgestellten Dokumente durch die Bereitstellungsanwendung des elektronischen Geräts der dokumentebereitstellenden Entität von dem elektronischen Gerät der dokumentebereitstellenden Entität an ein elektronisches Gerät der dokumenteanfordernden Entität und/oder das Senden der bereitgestellten Dokumente durch die Bereitstellungsanwendung des elektronischen Geräts der dokumentebereitstellenden Entität von dem elektronischen Gerät der dokumentebereitstellenden Entität an einen Speicher, insbesondere einen Cloud-Speicher, für welchen die dokumenteanfordernde Entität über Zugriffsrechte verfügt.

Das Verfahren wird ferner dadurch vorteilhaft weitergebildet, dass das eine oder die mehreren der dokumenteanfordernden Entität bereits bereitgestellten Dokumente auf Vollständigkeit geprüft werden, insbesondere mittels eines Vergleichs der bereits bereitgestellten Dokumente mit den in der elektronischen Dokumentenliste bezeichneten Dokumente, wobei das Prüfen auf Vollständigkeit durch ein elektronisches Gerät der dokumenteanfordernden Entität erfolgt. Ferner ist es vorteilhaft, wenn das eine oder die mehreren der dokumenteanfordernden Entität bereits bereitgestellten Dokumente hinsichtlich der Dokumenteneigenschaften und/oder dokumentenbezogenen Informationen geprüft wird, wobei das Prüfen hinsichtlich der Dokumenteneigenschaften und/oder der dokumentenbezogenen Informationen durch ein elektronisches Gerät der dokumenteanfordernden Entität erfolgt.

Darüber hinaus ist ein erfindungsgemäßes Verfahren bevorzugt, bei welchem eine Statusabfrage von einem elektronischen Gerät der dokumenteanfordernden Entität an die elektronische Datenverwaltungseinrichtung gesendet wird, wobei die Statusabfrage die Vollständigkeit der bereits bereitgestellten Dokumente betrifft. Außerdem kann das Verfahren das Senden von Statusinformationen hinsichtlich der Vollständigkeit der bereits bereitgestellten Dokumente von der elektronischen Datenverwaltungseinrichtung an ein elektronisches Gerät der dokumenteanfordernden Entität umfassen.

In einer weiteren bevorzugten Ausführungsform des erfindungsgemäßen Verfahrens wird durch die Bereitstellungsanwendung des elektronischen Geräts der dokumentebereitstellenden Entität die Möglichkeit des Bereitstellens der Dokumente, welche in der elektronischen Dokumentenliste bezeichnet sind, unterbunden, nachdem eine maximale Bereitstellungsfrist abgelaufen ist. Die maximale Bereitstellungsfrist kann einer Bereitstellungsdauer zugeordnet sein. Die Bereitstellungsdauer kann beispielsweise einen oder mehrere Tage, eine oder mehrere Wochen, einen oder mehrere Monate und/oder ein oder mehrere Jahre betragen. Außerdem kann die Bereitstellungsfrist ein konkretes Datum ausweisen. Ferner kann das Verfahren das Ausgeben einer gezielten Aufforderung zur Bereitstellung nicht-bereitgestellter Dokumente durch die Bereitstellungsanwendung des elektronischen Geräts der dokumentebereitstellenden Entität nach Ablauf einer ersten, zweiten oder dritten Bereitstellungsfrist umfassen. Vorzugsweise liegen die Ablaufdaten der ersten, zweiten und/oder dritten Bereitstellungsfrist vor dem Ablaufdatum der maximalen Bereitstellungsfrist. Auf diese Weise kann die dokumentebereitstellende Entität auf ein nahendes Fristende zur Einreichung von Dokumenten, welche auf der Dokumentenliste bezeichnet sind, hingewiesen werden.

Die der Erfindung zugrunde liegende Aufgabe wird ferner durch ein System der eingangs genannten Art gelöst, wobei das System zumindest ein elektronisches Gerät einer dokumenteanfordernden Entität, zumindest ein elektronisches Gerät einer dokumentebereitstellenden Entität und eine elektronische Datenverwaltungseinrichtung umfasst. Erfindungsgemäß ist das System dazu eingerichtet, das Verfahren zum Bereitstellen von Dokumenten durch eine dokumentebereitstellende Entität für eine dokumenteanfordernde Entität gemäß einer der vorstehend beschriebenen Ausführungsformen auszuführen. Hinsichtlich der Vorteile und Modifikationen des erfindungsgemäßen Systems wird auf die Vorteile und Modifikationen des erfindungsgemäßen Verfahrens verwiesen.

Vorzugsweise umfasst das zumindest eine elektronische Gerät der dokumenteanfordernden Entität, das zumindest eine elektronische Gerät der dokumentebereitstellenden Entität und/oder die elektronische Datenverwaltungseinrichtung jeweils eine Datenverarbeitungseinrichtung, welche insbesondere einen Prozessor umfasst, und/oder ist computergestützt ausgebildet.

Die der Erfindung zugrunde liegende Aufgabe wird ferner durch ein Computerprogrammprodukt gelöst, wobei das Computerprogrammprodukt Befehle umfasst, welche bei der Ausführung des Programms durch ein elektronisches Gerät dieses dazu veranlasst, die dem elektronischen Gerät der dokumentebereitstellenden Entität zugeordneten Verfahrensschritte des Verfahrens gemäß einer der vorstehend beschriebenen Ausführungsformen auszuführen. Alternativ oder zusätzlich umfasst das Computerprogrammprodukt Befehle, welche bei der Ausführung des Programms durch ein elektronisches Gerät dieses dazu veranlasst, die dem elektronischen Gerät der dokumenteanfordernden Entität zugeordneten Verfahrensschritte des Verfahrens nach einer der vorstehend beschriebenen Ausführungsformen auszuführen. Alternativ oder zusätzlich umfasst das Computerprogrammprodukt Befehle, welche bei der Ausführung des Programms durch eine elektronische Datenverwaltungseinrichtung diese dazu veranlasst, die der elektronischen Datenverwaltungseinrichtung zugeordneten Verfahrensschritte des Verfahrens nach einer der vorstehend beschriebenen Ausführungsformen auszuführen. Hinsichtlich der Vorteile und Modifikationen des erfindungsgemäßen Computerprogrammprodukts wird auf die Vorteile und Modifikationen des erfindungsgemäßen Verfahrens verwiesen.

Die der Erfindung zugrunde liegende Aufgabe wird ferner durch einen computerlesbaren Datenträger gelöst, wobei auf dem computerlesbaren Datenträger ein Computerprogrammprodukt nach einer der vorstehend beschriebenen Ausführungsformen gespeichert ist. Hinsichtlich der Vorteile und Modifikationen des erfindungsgemäßen computerlesbaren Datenträgers wird auf die Vorteile und Modifikationen des erfindungsgemäßen Verfahrens verwiesen.

Nachfolgend werden bevorzugte Ausführungsformen der Erfindung unter Bezugnahme auf die beiliegende Zeichnung näher erläutert und beschrieben. Dabei zeigt:

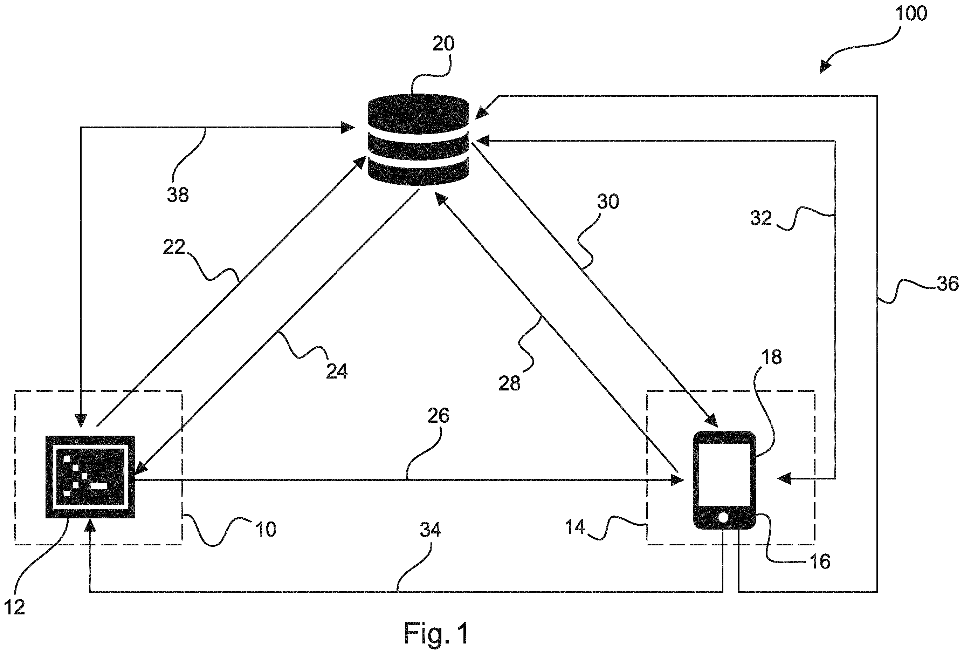

- Fig. 1: ein Ausführungsbeispiel des erfindungsgemäßen Systems während des Ausführens einer Ausführungsform des erfindungsgemäßen Verfahrens.

Gemäß Fig. 1 umfasst das System 100, welches ein System 100 zur Datenverarbeitung ist, zwei elektronische Geräte 12, 16 und eine elektronische Datenverwaltungseinrichtung 20.

Das elektronische Gerät 12 ist als Computer ausgebildet und einer dokumenteanfordernden Entität 10 zugeordnet. Die dokumenteanfordernde Entität 10 kann beispielsweise ein Bankinstitut oder eine amtliche Behörde sein.

Das elektronische Gerät 16 kann beispielsweise als mobiles Endgerät, insbesondere als Tablet oder Smartphone ausgebildet sein, wobei das elektronische Gerät 16 einer dokumentebereitstellenden Entität 14 zugeordnet ist. Die dokumentebereitstellende Entität 14 kann beispielsweise ein Kunde, welcher Dienstleistungen des Bankinstituts in Anspruch nehmen möchte, oder ein Bürger, welche eine Serviceleistung der amtlichen Behörde in Anspruch nehmen möchte, sein. Auf dem elektronischen Gerät 16 ist eine Bereitstellungsanwendung installiert, dazu eingerichtet ist, über eine Anzeigeeinrichtung 18 des elektronischen Geräts 16 Informationen auszugeben.

Die elektronische Datenverwaltungseinrichtung 20 umfasst einen Server, welcher dazu eingerichtet ist, über eine SSL-geschützte Internetverbindung mit den elektronischen Geräten 12, 16 Daten auszutauschen.

Das dargestellte Verfahren mit den Verfahrensschritten 22 bis 38 dient dem Bereitstellen von Dokumenten durch die dokumentebereitstellende Entität 14 für die dokumenteanfordernde Entität 10.

Zunächst wird hierbei eine elektronische Dokumentenliste erzeugt, in welcher mehrere unterschiedliche Dokumente bezeichnet sind. Die in der Dokumentenliste bezeichneten Dokumente werden von der dokumenteanfordernden Entität 10, also beispielsweise dem Bankinstitut oder der amtlichen Behörde, benötigt, um eine von der dokumentebereitstellenden Entität 14, also beispielsweise dem Bankkunden oder dem Bürger, angefragte Dienstleistung oder Serviceleitung erbringen zu können. Dies kann beispielsweise die Eröffnung eines Kontos oder die Ausstellung eines Ausweises sein.

Die elektronische Dokumentenliste umfasst zu mehreren in der elektronischen Dokumentenliste bezeichneten Dokumenten Dokumenteneigenschaften und/oder dokumentenbezogene Informationen. Die Dokumenteneigenschaften und die dokumentenbezogenen Informationen umfassen dabei beispielsweise den Dokumententyp des jeweiligen Dokuments, Informationen zu der zwingenden Notwenigkeit des jeweiligen Dokuments, die Seitenanzahl des jeweiligen Dokuments, Informationen über die Relevanz der Vorder- und/oder Rückseite der einen oder der mehreren Seiten des jeweiligen Dokuments und/oder andere Dokumenteninformationen.

Nach der Erzeugung der Dokumentenliste wird zunächst der folgende Schritt ausgeführt:
- 22): Senden der elektronischen Dokumentenliste von dem elektronischen Gerät 12 an die elektronische Datenverwaltungseinrichtung 20.

Die elektronische Dokumentenliste wird daraufhin von der elektronischen Datenverwaltungseinrichtung 20 empfangen und gespeichert. Ferner wird der elektronischen Dokumentenliste durch die elektronische Datenverwaltungseinrichtung 20 eine elektronische Kennung zugeordnet. Die elektronische Kennung kann beispielsweise eine Identifikationsnummer umfassen oder eine Identifikationsnummer sein. Das Senden der elektronischen Dokumentenliste an die elektronische Datenverwaltungseinrichtung 20 erfordert dabei gültige Zugangsdaten, damit das elektronische Gerät 12 auf die elektronische Datenverwaltungseinrichtung 20 zugreifen kann.

Nachdem der elektronischen Dokumentenliste eine elektronische Kennung zugeordnet wurde, wird die elektronische Kennung durch die elektronische Datenverwaltungseinrichtung 20 in einen auslesbaren Code umgewandelt. Beispielsweise umfasst der auslesbare Code einen zweidimensionalen optoelektronisch lesbaren Code, wie etwa einen Fotocode oder einen Matrix-Code, oder einen Audio-Code, oder einen einfachen numerischen oder alphanumerischen Bestätigungscode. Der Matrix-Code kann ein QR-Code sein. Die Umwandlung der elektronischen Kennung in den auslesbaren Code stellt eine Transformation dar. Nachfolgend wird der folgende Schritt ausgeführt:
- 24): Senden des auslesbaren Codes von der elektronischen Datenverwaltungseinrichtung 20 an das elektronische Gerät 12 der dokumenteanfordernden Entität 10.

Der auslesbare Code wird von dem elektronischen Gerät 12 der dokumenteanfordernden Entität 10 empfangen und zum Einlesen bereitgestellt, sodass direkt im Anschluss der folgende Schritt ausgeführt werden kann:
- 26): Einlesen des auslesbaren Codes durch die Bereitstellungsanwendung des elektronischen Geräts 16 der dokumentebereitstellenden Entität 14.

Das Einlesen des auslesbaren Codes durch die Bereitstellungsanwendung des elektronischen Geräts 16 der dokumentebereitstellenden Entität 14 kann beispielsweise mittels einer Kamera des elektronischen Geräts 16 der dokumentebereitstellenden Entität 14 erfolgen. Nachdem der auslesbare Code eingelesen wurde, wird der auslesbare Code durch die Bereitstellunganwendung des elektronischen Geräts 16 der dokumentebereitstellenden Entität 14 zurück in die elektronische Kennung umgewandelt. Durch das Einlesen des auslesbaren Datenpaktes und das Umwandeln des auslesbaren Codes in die elektronische Kennung durch die Bereitstellunganwendung des elektronischen Geräts 16 der dokumentebereitstellenden Entität 14 wird der Bereitstellungsanwendung des elektronischen Geräts 16 der dokumentebereitstellenden Entität 14 somit die elektronischen Kennung, welche einer elektronische Dokumentenliste auf der elektronischen Datenverwaltungseinrichtung 20 zugeordnet ist, bereitgestellt.

Nachdem der auslesbare Code wieder in die elektronische Kennung umgewandelt wurde, wird der folgende Schritt ausgeführt:
- 28): Senden der elektronischen Kennung durch die Bereitstellungsanwendung des elektronischen Geräts 16 der dokumentebereitstellenden Entität 14 an die elektronische Datenverwaltungseinrichtung 20.

Die elektronische Kennung wird daraufhin von der Datenverwaltungseinrichtung 20 empfangen, sodass die empfangene elektronische Kennung durch die elektronische Datenverwaltungseinrichtung 20 ausgewertet werden kann. Das Auswerten der elektronischen Kennung durch die elektronische Datenverwaltungseinrichtung 20 umfasst das Auslesen der elektronischen Kennung durch die elektronische Datenverwaltungseinrichtung 20 und das Prüfen, ob der elektronischen Kennung eine elektronische Dokumentenliste zugeordnet ist, durch die elektronische Datenverwaltungseinrichtung 20. Wenn der elektronischen Kennung eine elektronische Dokumentenliste zugeordnet ist, identifiziert die Datenverwaltungseinrichtung 20 die der elektronischen Kennung zugeordnete elektronische Dokumentenliste, sodass daraufhin der folgende Schritt ausgeführt werden kann:
- 30): Senden der zu der elektronischen Kennung zugeordneten elektronischen Dokumentenliste von der elektronischen Datenverwaltungseinrichtung 20 an die Bereitstellungsanwendung des elektronischen Geräts 16 der dokumentebereitstellenden Entität 14.

Durch das Senden der elektronischen Kennung an die elektronische Datenverwaltungseinrichtung 20, dem Auswerten der elektronischen Kennung und dem Senden der zu der elektronischen Kennung zugeordneten elektronischen Dokumentenliste an die Bereitstellungsanwendung des elektronischen Geräts 16 der dokumentebereitstellenden Entität 14 wird die elektronische Dokumentenliste, welche der Kennung zugeordnet ist, durch die Bereitstellungsanwendung des elektronischen Geräts 16 der dokumentebereitstellenden Entität 14 von der elektronischen Datenverwaltungseinrichtung 20 abgerufen.

Wenn der elektronischen Kennung, welche durch die Bereitstellungsanwendung des elektronischen Geräts 16 der dokumentebereitstellenden Entität 14 an die elektronische Datenverwaltungseinrichtung 20 gesendet wurde, keine elektronische Dokumentenliste zugeordnet ist, wird auch keine elektronische Dokumentenliste von der elektronischen Datenverwaltungseinrichtung 20 an die Bereitstellungsanwendung des elektronischen Geräts 16 der dokumentebereitstellenden Entität 14 gesendet. Wenn durch die Bereitstellungsanwendung des elektronischen Geräts 16 der dokumentebereitstellenden Entität 14 mehrmals eine elektronische Kennung an die elektronische Datenverwaltungseinrichtung 20 gesendet wurde, welcher keine elektronische Dokumentenliste zugeordnet ist, wird die Kommunikation mit dem elektronischen Gerät 16 der dokumentebereitstellenden Entität 14 abgebrochen. Der Abbruch der Kommunikation erfolgt, wenn eine Grenzanzahl von Sendungen von elektronischen Kennungen, welchen keine elektronische Dokumentenliste zugeordnet ist, überschritten wurde.

Nach dem Senden der zu der elektronischen Kennung zugeordneten elektronischen Dokumentenliste an die Bereitstellungsanwendung des elektronischen Geräts 16 der dokumentebereitstellenden Entität 14 werden durch die Bereitstellungsanwendung des elektronischen Geräts 16 der dokumentebereitstellenden Entität 14 mehrere Aufforderungen zum Bereitstellen der Dokumente, welche in der elektronischen Dokumentenliste bezeichnet sind, ausgegeben. Das Ausgeben der Aufforderungen zum Bereitstellen der Dokumente, welche in der elektronischen Dokumentenliste bezeichnet sind, durch die Bereitstellungsanwendung des elektronischen Geräts 16 der dokumentebereitstellenden Entität 14 erfolgt dabei durch ein Darstellen der jeweiligen Dokumentenbezeichnungen auf der Anzeigeeinrichtung 18 des elektronischen Geräts 16 der dokumentebereitstellenden Entität 14, wobei der Darstellvorgang durch die Bereitstellungsanwendung gesteuert wird. Nachdem eine Dokumentenbezeichnung auf der Anzeigeeinrichtung 18 des elektronischen Geräts 16 der dokumentebereitstellenden Entität 14 dargestellt wurde, wird durch die Bereitstellungsanwendung des elektronischen Geräts 16 der dokumentebereitstellenden Entität 14 selbsttätig ein Kameramodus oder ein Scanmodus des elektronischen Geräts 16 der dokumentebereitstellenden Entität 14 ausgewählt.

Der Benutzer des elektronischen Geräts 16 kann auf diese Weise sämtliche auf der Dokumentenliste bezeichnete Dokumente durch entsprechendes Abfotografieren der Bereitstellungsanwendung zur Verfügung stellen.

Während und nach der Bereitstellung der auf der Dokumentenliste bezeichneten Dokumente werden die bereitgestellten Dokumente durch Bereitstellungsanwendung des elektronischen Geräts 16 der dokumentebereitstellenden Entität 14 hinsichtlich der Dokumenteneigenschaften und der dokumentenbezogenen Informationen, welche ebenfalls Bestandteil der Dokumentenliste sind, geprüft. Wenn im Rahmen der Prüfung ein Fehler des bereitgestellten Dokuments erfasst wird, wird die entsprechende Aufforderung zum Bereitstellen dieses Dokument durch die Bereitstellungsanwendung des elektronischen Geräts 16 der dokumentebereitstellenden Entität 14 wiederholt, damit das Dokument fehlerfrei der Bereitstellungsanwendung des elektronischen Geräts 16 der dokumentebereitstellenden Entität 14 bereitgestellt wird.

Nachdem einzelne, mehrere oder sämtliche der auf der Dokumentenliste bezeichneten Dokumente der Bereitstellungsanwendung durch entsprechendes Abfotografieren bereitgestellt wurden, kann der folgende Schritt ausgeführt werden:
- 32): Prüfen der der dokumenteanfordernden Entität 10 bereits bereitgestellten Dokumente auf Vollständigkeit.

Die Prüfung auf Vollständigkeit erfolgt beispielsweise mittels eines Vergleichs der bereits bereitgestellten Dokumente mit den in der elektronischen Dokumentenliste bezeichneten Dokumenten durch ein elektronisches Gerät 12 der dokumenteanfordernden Entität 10.

Wenn sämtliche Dokumente in geeigneter Form vorliegen, kann einer können beide der folgenden Schritte ausgeführt werden:
- 34): Senden der bereitgestellten Dokumente durch die Bereitstellungsanwendung des elektronischen Geräts 16 der dokumentebereitstellenden Entität 14 von dem elektronischen Gerät 16 der dokumentebereitstellenden Entität 14 an die dokumenteanfordernde Entität 10; und
- 36): Senden der bereitgestellten Dokumente durch die Bereitstellungsanwendung des elektronischen Geräts der dokumentebereitstellenden Entität 14 von dem elektronischen Gerät 16 der dokumentebereitstellenden Entität 14 an einen Cloud-Speicher, für welchen die dokumenteanfordernde Entität 10 über Zugriffsrechte verfügt.

Unabhängig davon, ob die Dokumente durch die Bereitstellungsanwendung des elektronischen Geräts 16 der dokumentebereitstellenden Entität 14 von dem elektronischen Gerät 16 der dokumentebereitstellenden Entität 14 an die dokumenteanfordernde Entität 10 oder an einen Cloud-Speicher, für welchen die dokumenteanfordernde Entität 10 über Zugriffsrechte verfügt, gesendet werden, erfolgt hierdurch eine Bereitstellung der auf der elektronischen Dokumentenliste bezeichneten Dokumente durch die Bereitstellungsanwendung des elektronischen Geräts 16 der dokumentebereitstellenden Entität 14 für die dokumenteanfordernde Entität 10.

Unabhängig davon, ob bereits sämtliche Dokumente in geeigneter Form vorliegen, kann der folgende Schritt ausgeführt werden:
- 38): Senden einer Statusabfrage von dem elektronischen Gerät 12 der dokumenteanfordernden Entität 10 an die elektronische Datenverwaltungseinrichtung 20 hinsichtlich der Vollständigkeit von bereits bereitgestellten Dokumenten.

Beispielsweise liegen Dokumente nicht in einer geeigneten Form vor, wenn der hinterlegte Dokumententyp nicht korrekt ist, das bereitgestellte Dokument eine falsche Seitenanzahl aufweist, Pflichtfelder und/oder Checkboxen eines Dokuments nicht gefüllt wurden, oder relevante Vorder- und/oder Rückseiten fehlen.

Nachdem die Statusabfrage von dem elektronischen Gerät 12 der dokumenteanfordernden Entität 10 versendet wurde, kann die elektronische Datenverwaltungseinrichtung 20 Statusinformationen hinsichtlich der Vollständigkeit von bereits bereitgestellten Dokumenten an das elektronische Gerät 12 der dokumenteanfordernden Entität 10 senden.

### Bezugszeichen

- 10: dokumenteanfordernde Entität
- 12: elektronisches Gerät
- 14: dokumentebereitstellende Entität
- 16: elektronisches Gerät
- 18: Anzeigeeinrichtung
- 20: elektronische Datenverwaltungseinrichtung
- 22-38: Verfahrensschritte

- 100: System

## Patentansprüche

1. Verfahren zum Bereitstellen von Dokumenten durch eine dokumentebereitstellende Entität (14) für eine dokumenteanfordernde Entität (10), mit den Schritten:
- Bereitstellen einer elektronischen Kennung, welche einer elektronischen Dokumentenliste zugeordnet ist, für eine Bereitstellungsanwendung eines elektronischen Geräts (16) einer dokumentebereitstellenden Entität (14); und
- Abrufen der elektronischen Dokumentenliste, welche der Kennung zugeordnet ist, durch die Bereitstellungsanwendung des elektronischen Geräts (16) der dokumentebereitstellenden Entität (14) von einer elektronischen Datenverwaltungseinrichtung (20);
**gekennzeichnet durch** die Schritte:
- Ausgeben einer oder mehrerer Aufforderungen zum Bereitstellen der Dokumente, welche in der elektronischen Dokumentenliste bezeichnet sind, durch die Bereitstellungsanwendung des elektronischen Geräts (16) der dokumentebereitstellenden Entität (14); und
- Bereitstellen der auf der elektronischen Dokumentenliste bezeichneten Dokumente durch die Bereitstellungsanwendung des elektronischen Geräts (16) der dokumentebereitstellenden Entität (14) für die dokumenteanfordernde Entität (10).

2. Verfahren nach Anspruch 1,
**gekennzeichnet durch** einen oder mehrere der folgenden Schritte:
- Erzeugen der elektronischen Dokumentenliste, in welcher die mehreren unterschiedlichen Dokumente bezeichnet sind;
- Senden der elektronischen Dokumentenliste an die elektronische Datenverwaltungseinrichtung (20);
- Speichern der elektronischen Dokumentenliste durch die elektronische Datenverwaltungseinrichtung (20);
- Zuordnen einer elektronischen Kennung zu der elektronischen Dokumentenliste durch die elektronische Datenverwaltungseinrichtung (20).

3. Verfahren nach Anspruch 1 oder 2,
**gekennzeichnet durch** einen oder mehrere der folgenden Schritte:
- Umwandeln der elektronischen Kennung in einen auslesbaren Code durch die elektronische Datenverwaltungseinrichtung (20);
- Senden der elektronischen Kennung oder des auslesbaren Codes von der elektronischen Datenverwaltungseinrichtung (20) an ein elektronisches Gerät (12) der dokumenteanfordernden Entität (10);
- Umwandeln der elektronischen Kennung in einen auslesbaren Code durch das elektronische Gerät (12) der dokumenteanfordernden Entität (10).

4. Verfahren nach Anspruch 3,
**dadurch gekennzeichnet, dass** das Bereitstellen der elektronischen Kennung, welche der elektronischen Dokumentenliste zugeordnet ist, für die Bereitstellungsanwendung des elektronischen Geräts (16) der dokumentebereitstellenden Entität (14) einen oder mehrere der folgenden Schritte umfasst:
- Einlesen der elektronischen Kennung oder des auslesbaren Codes durch die Bereitstellungsanwendung des elektronischen Geräts (16) der dokumentebereitstellenden Entität (14);
- Senden der elektronischen Kennung oder des auslesbaren Codes von dem elektronischen Gerät (12) der dokumenteanfordernden Entität (10) an das elektronische Gerät (16) der dokumentebereitstellenden Entität (14);
- Umwandeln des auslesbaren Codes in die elektronische Kennung durch die Bereitstellunganwendung des elektronischen Geräts (16) der dokumentebereitstellenden Entität (14).

5. Verfahren nach Anspruch 4,
**dadurch gekennzeichnet, dass** das Abrufen der elektronischen Dokumentenliste, welche der Kennung zugeordnet ist, durch die Bereitstellungsanwendung des elektronischen Geräts (16) der dokumentebereitstellenden Entität (14) von der elektronischen Datenverwaltungseinrichtung (20) einen oder mehrere der folgenden Schritte umfasst:
- Senden der elektronischen Kennung durch die Bereitstellungsanwendung des elektronischen Geräts (16) der dokumentebereitstellenden Entität (14) an die elektronische Datenverwaltungseinrichtung (20);
- Auswerten der von der Bereitstellungsanwendung des elektronischen Geräts (16) der dokumentebereitstellenden Entität (14) empfangenen elektronischen Kennung durch die elektronische Datenverwaltungseinrichtung (20);
- Senden der zu der elektronischen Kennung zugeordneten elektronischen Dokumentenliste von der elektronischen Datenverwaltungseinrichtung (20) an die Bereitstellungsanwendung des elektronischen Geräts (16) der dokumentebereitstellenden Entität (14).

6. Verfahren nach einem der vorstehenden Ansprüche,
**dadurch gekennzeichnet, dass** das Ausgeben der einen oder der mehreren Aufforderungen zum Bereitstellen der Dokumente, welche in der elektronischen Dokumentenliste bezeichnet sind, durch die Bereitstellungsanwendung des elektronischen Geräts (16) der dokumentebereitstellenden Entität (14) einen oder mehrere der folgenden Schritte umfasst:
- Darstellen einer oder mehrerer Dokumentenbezeichnungen durch die Bereitstellungsanwendung auf einer Anzeigeeinrichtung (18) des elektronischen Geräts (16) der dokumentebereitstellenden Entität (14);
- akustisches Wiedergeben einer oder mehrerer Dokumentenbezeichnungen durch die Bereitstellungsanwendung mittels einer Tonwiedergabeeinrichtung des elektronischen Geräts (16) der dokumentebereitstellenden Entität (14).
- selbsttätiges Auswählen eines Kameramodus oder eines Scanmodus oder eines Tonaufnahmemodus durch die Bereitstellungsanwendung des elektronischen Geräts (16) der dokumentebereitstellenden Entität (14);
- Auswählen eines bereits auf einem Datenträger des elektronischen Geräts (16) der dokumentebereitstellenden Entität (14) vorliegenden Dokuments.

7. Verfahren nach einem der vorstehenden Ansprüche,
**dadurch gekennzeichnet, dass** die elektronische Dokumentenliste zu einzelnen, mehreren oder sämtlichen in der elektronischen Dokumentenliste bezeichneten Dokumenten Dokumenteneigenschaften und/oder dokumentenbezogene Informationen umfasst.

8. Verfahren nach einem der vorstehenden Ansprüche,
**dadurch gekennzeichnet, dass** das Ausgeben der einen oder der mehreren Aufforderungen zum Bereitstellen der Dokumente, welche in der elektronischen Dokumentenliste bezeichnet sind, durch die Bereitstellungsanwendung des elektronischen Geräts (16) der dokumentebereitstellenden Entität (14) einen oder mehrere der folgenden Schritte umfasst:
- Prüfen des einen oder der mehreren bereitgestellten Dokumente, insbesondere hinsichtlich der Dokumenteneigenschaften und/oder der dokumentenbezogenen Informationen durch Bereitstellungsanwendung des elektronischen Geräts (16) der dokumentebereitstellenden Entität (14);
- Wiederholen einer Aufforderung zum Bereitstellen eines Dokument, welches in der elektronischen Dokumentenliste bezeichnet ist, durch die Bereitstellungsanwendung des elektronischen Geräts (16) der dokumentebereitstellenden Entität (14), wenn durch die Prüfung des entsprechenden Dokuments ein Fehler des bereitgestellten Dokuments erfasst worden ist.

9. Verfahren nach einem der vorstehenden Ansprüche,
**dadurch gekennzeichnet, dass** das Bereitstellen der auf der elektronischen Dokumentenliste bezeichneten Dokumente durch die Bereitstellungsanwendung des elektronischen Geräts (16) der dokumentebereitstellenden Entität (14) für die dokumenteanfordernde Entität (10) einen oder mehrere der folgenden Schritte umfasst:
- Senden der bereitgestellten Dokumente durch die Bereitstellungsanwendung des elektronischen Geräts (16) der dokumentebereitstellenden Entität (14) von dem elektronischen Gerät (16) der dokumentebereitstellenden Entität (14) an ein elektronisches Gerät (12) der dokumenteanfordernden Entität (10);
- Senden der bereitgestellten Dokumente durch die Bereitstellungsanwendung des elektronischen Geräts der dokumentebereitstellenden Entität (14) von dem elektronischen Gerät (16) der dokumentebereitstellenden Entität (14) an einen Speicher, insbesondere einen Cloud-Speicher, für welchen die dokumenteanfordernde Entität (10) über Zugriffsrechte verfügt.

10. Verfahren nach einem der vorstehenden Ansprüche,
**gekennzeichnet durch** einen oder mehrere der folgenden Schritte:
- Prüfen des einen oder der mehreren der dokumenteanfordernden Entität (10) bereits bereitgestellten Dokumente auf Vollständigkeit, insbesondere mittels eines Vergleich der bereits bereitgestellten Dokumente mit den in der elektronischen Dokumentenliste bezeichneten Dokumente durch ein elektronisches Gerät (12) der dokumenteanfordernden Entität (10).
- Prüfen des einen oder der mehreren der dokumenteanfordernden Entität (10) bereits bereitgestellten Dokumente hinsichtlich der Dokumenteneigenschaften und/oder der dokumentenbezogenen Informationen durch ein elektronisches Gerät (12) der dokumenteanfordernden Entität (10).

11. Verfahren nach einem der vorstehenden Ansprüche,
**gekennzeichnet durch** den Schritt:
- Senden einer Statusabfrage von einem elektronischen Gerät (12) der dokumenteanfordernden Entität (10) an die elektronische Datenverwaltungseinrichtung (20) hinsichtlich der Vollständigkeit der gesamten elektronischen Dokumentenliste sowie der Vollständigkeit einzelner bereits bereitgestellter Dokumente;
- Senden von Statusinformationen hinsichtlich der Vollständigkeit von bereits bereitgestellten Dokumenten von der elektronischen Datenverwaltungseinrichtung (20) an ein elektronisches Gerät (12) der dokumenteanfordernden Entität (10).

12. Verfahren nach einem der vorstehenden Ansprüche,
**gekennzeichnet durch** einen oder mehrere der folgenden Schritte:
- Unterbinden der Möglichkeit des Bereitstellens der Dokumente, welche in der elektronischen Dokumentenliste bezeichnet sind, durch die Bereitstellungsanwendung des elektronischen Geräts der dokumentebereitstellenden Entität (14) nach Ablauf einer maximalen Bereitstellungsfrist;
- Ausgeben einer gezielten Aufforderung zur Bereitstellung nicht-bereitgestellter Dokumente durch die Bereitstellungsanwendung des elektronischen Geräts der dokumentebereitstellenden Entität (14) nach Ablauf einer ersten, zweiten oder dritten Bereitstellungsfrist.

13. System (100), insbesondere zur Datenverarbeitung, mit
- zumindest einem elektronischen Gerät (12) einer dokumenteanfordernden Entität (10);
- zumindest einem elektronischen Gerät (16) einer dokumentebereitstellenden Entität (14); und
- einer elektronischen Datenverwaltungseinrichtung (20),
**dadurch gekennzeichnet, dass** das System (100) dazu eingerichtet ist, das Verfahren nach einem vorstehenden Ansprüche auszuführen.

14. Computerprogrammprodukt, umfassend Befehle, welche bei der Ausführung des Programms
- durch ein elektronisches Gerät (16) dieses dazu veranlasst, die dem elektronischen Gerät (16) der dokumentebereitstellenden Entität (14) zugeordneten Verfahrensschritte des Verfahrens nach einem der Ansprüche 1 bis 12 auszuführen;
- durch ein elektronisches Gerät (12) dieses dazu veranlasst, die dem elektronischen Gerät (12) der dokumenteanfordernden Entität (10) zugeordneten Verfahrensschritte des Verfahrens nach einem der Ansprüche 1 bis 12 auszuführen; und/oder
- durch eine elektronische Datenverwaltungseinrichtung (20) diese dazu veranlasst, die der elektronischen Datenverwaltungseinrichtung (20) zugeordneten Verfahrensschritte des Verfahrens nach einem der Ansprüche 1 bis 12 auszuführen.

15. Computerlesbarer Datenträger, auf welchem ein Computerprogrammprodukt nach Anspruch 14 gespeichert ist.
